# EUROPEAN PATENT APPLICATION

(11) **EP 4 803 320 A1**
(43) Date of publication of application: **09.09.2026**
(21) Application number: 26161332.7
(22) Date of filing: 27.02.2026
(51) Int. Cl.: B41J 13/10, B41J 11/00, B41J 11/70, B65H 29/52, G07F 17/42

(54) **BEZEL AND PRINTER**

(30) Priority: 05.03.2025 JP 2025034552
(71) Applicant: FCL Components Limited, Tokyo 140-0002 (JP)
(72) Inventor: YAYAMA, Tomoki, Tokyo, 140-0002 (JP)
(74) Representative: Haseltine Lake Kempner LLP

(57) **Abstract**

A bezel configured for use in a printer including a paper discharge port includes a guide part including a contact surface configured to contact a part of a sheet of paper discharged in a first direction from the paper discharge port and a paper removal port configured to allow the sheet of paper to be removed, wherein the guide part is configured to redirect a discharge direction of the sheet of paper from the first direction to a second direction.

## Description

### CROSS-REFERENCE TO RELATED APPLICATION

This application is based upon and claims the benefit of priority of the prior Japanese Patent Application No. 2025-034552 filed on March 5, 2025, the entire contents of which are incorporated herein by reference.

### TECHNICAL FIELD

A certain aspect of the embodiments is related to a bezel and a printer.

### BACKGROUND

Printers for issuing tickets (such as those for concerts or plays) or receipts are widely used in applications such as ticket issuing machines in convenience stores, registers in retail shops, and ATMs (Automated Teller Machines) or CDs (Cash Dispensers) in banks. Further, bezels used in such printers are known.

For example, Patent Literature (PTL) 1 discloses a bezel with an opening for forming a paper loop in such as a top plate of the paper conveying part. PTL 2 discloses a bezel of a roll paper printer for preventing malfunction by providing a space for allowing deflection of a conveyed sheet. PTL 3 discloses a bezel for preventing a malfunction such as a jam by providing a standing wall and a discharge port downstream of a paper guide part and forming a looping space on the upper surface.

However, in the bezel structures described in PTLs 1, 2, and 3, both a printer provided with the bezel and a ticket vending machine accommodating the printer may have an increased horizontal depth.

### RELATED ART

### PATENT LITERATURES

| | |
|---|---|
| [PTL 1] | Japanese Laid-Open Patent Application no. 2008-068950 |
| [PTL 2] | Japanese Laid-Open Patent Application no. 2009-083447 |
| [PTL 3] | Japanese Laid-Open Patent Application no. H10-119375 |

### SUMMARY

The present disclosure aims to provide a bezel capable of reducing the horizontal depth of a printer.

A bezel configured for use in a printer including a paper discharge port includes a guide part including a contact surface configured to contact a part of a sheet of paper discharged in a first direction from the paper discharge port and a paper removal port configured to allow the sheet of paper to be removed, wherein the guide part is configured to redirect a discharge direction of the sheet of paper from the first direction to a second direction.

According to an embodiment of the present disclosure, a bezel capable of reducing the horizontal depth of a printer can be provided.

### BRIEF DESCRIPTION OF THE DRAWINGS

FIG. 1 is a cross-sectional view illustrating an overall configuration of a printer having a bezel according to a first embodiment;
FIG. 2 is a perspective view illustrating the bezel according to the first embodiment viewed from a front;
FIG. 3 is a perspective view illustrating the bezel according to the first embodiment viewed from a rear;
FIG. 4 is a perspective half cross-sectional view illustrating the bezel according to the first embodiment viewed from the front;
FIG. 5 is a perspective half cross-sectional view illustrating the bezel according to the first embodiment viewed from the rear;
FIG. 6 is a cross-sectional view illustrating the bezel according to the first embodiment viewed from a side;
FIG. 7 is a cross-sectional view illustrating paper bending in the printer having the bezel according to the first embodiment;
FIG. 8 is a cross-sectional view illustrating an overall configuration of a printer having a bezel according to a second embodiment;
FIG. 9 is a perspective view illustrating the bezel according to the second embodiment viewed from a front;
FIG. 10 is a perspective view illustrating the bezel according to the second embodiment viewed from a rear;
FIG. 11 is a front view illustrating the bezel according to the second embodiment;
FIG. 12 is a cross-sectional view taken along a line XII-XII of FIG. 11;
FIG. 13 is a cross-sectional view illustrating paper bending in the printer having the bezel according to the second embodiment;
FIG. 14 is a block diagram illustrating an overall configuration of a printer having a bezel according to a third embodiment;
FIG. 15 is a cross-sectional view illustrating the overall configuration of the printer having the bezel according to the third embodiment; and
FIG. 16 is a cross-sectional view illustrating an overall configuration of a printer having a bezel according to a modified example.

### DESCRIPTION OF EMBODIMENTS

In the following, embodiments of the present invention will be described with reference to the accompanying drawings. Since each of the drawings schematically shows embodiments of the present disclosure, the scale, spacing, positional relationship, or the like of each member may be exaggerated, or a part of the members may be omitted from the drawings. In some cases, an end view showing only a cut surface is used as a cross-sectional view.

In the following description, components having substantially the same function are denoted by common reference numerals, and description thereof is omitted as appropriate. In some cases, terms indicating a specific direction or position, such as "top", "front", and other terms including these terms are used. However, these terms are used only for ease of understanding of the relative direction or position in the referenced drawings. As long as the relative positional relationship in terms of "top", "front", and the like in the referenced drawings is the same, drawings other than those referred to in the present disclosure or actual products need not be arranged in the same manner as in the referenced drawings.

In each drawing, orthogonal coordinates having an X-axis, a Y-axis, and a Z-axis are used as a direction expression. The X-axis, the Y-axis, and the Z-axis are orthogonal to each other. In an X-direction, a direction toward which the arrow is directed is referred to as a +X-direction, and a direction opposite to the +X-direction is referred to as a -X-direction. In a Y-direction, a direction toward which the arrow is directed is referred to as a +Y-direction, and a direction opposite to the +Y-direction is referred to as a -Y-direction. In a Z-direction, a direction toward which the arrow is directed is referred to as a +Z-direction, and a direction opposite to the +Z-direction is referred to as a -Z-direction. In the present disclosure, as an example, the +Z-direction corresponds to the "top", and the +Y-direction corresponds to the "front". The Y-direction corresponds to a horizontal depth direction of the printer having the bezel according to the embodiment.

In the present disclosure, "along the direction" includes having an inclination of ±20 degrees or less with respect to the direction. "Perpendicular" includes having a deviation of ±10 degrees or less with respect to 90 degrees. "Disposed" is not limited to a case of direct contact, but also includes a case of indirect arrangement, for example, through another member.

### [FIRST EMBODIMENT]

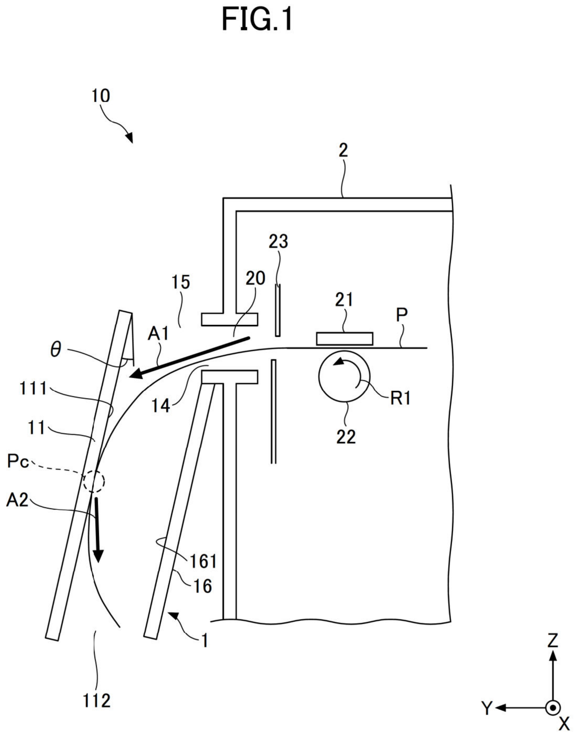

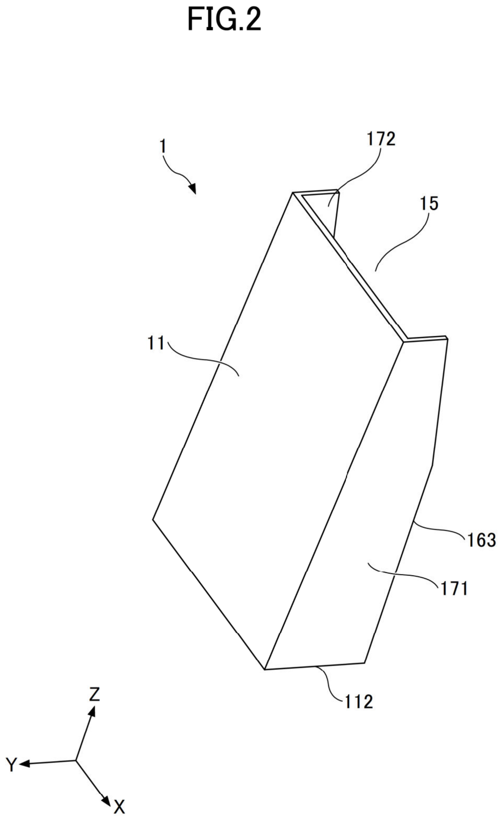

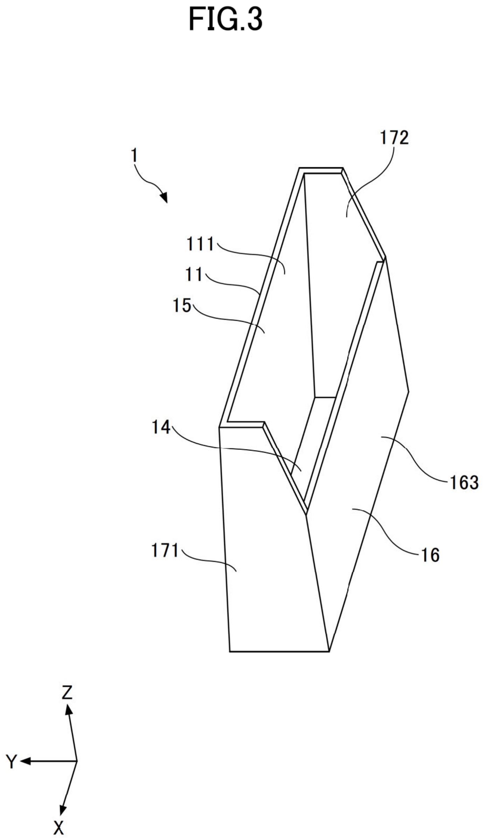

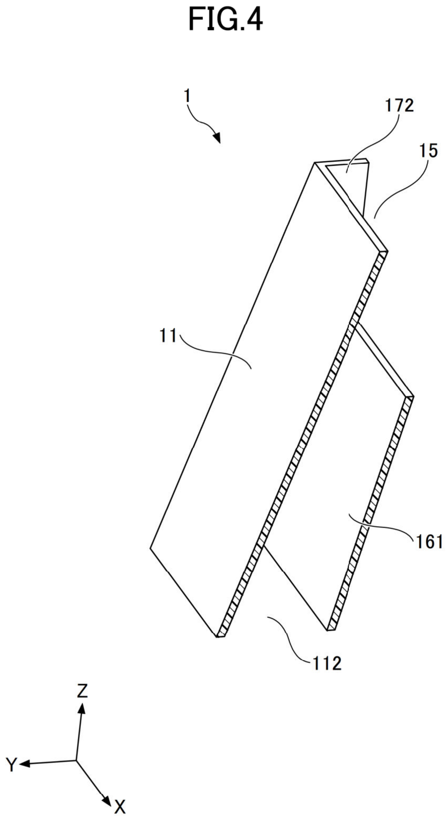

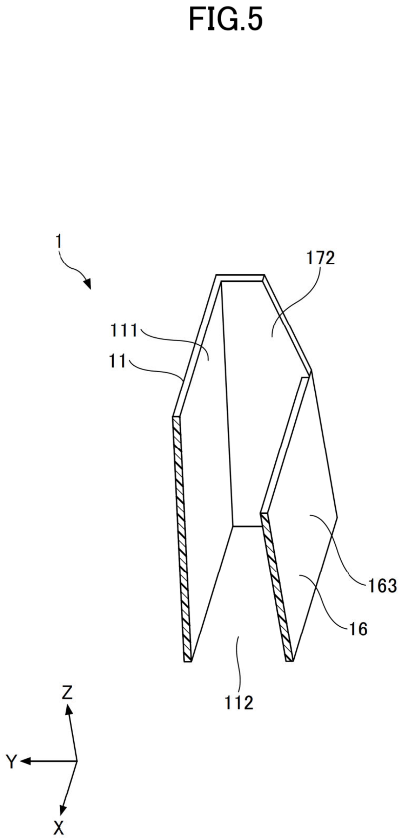

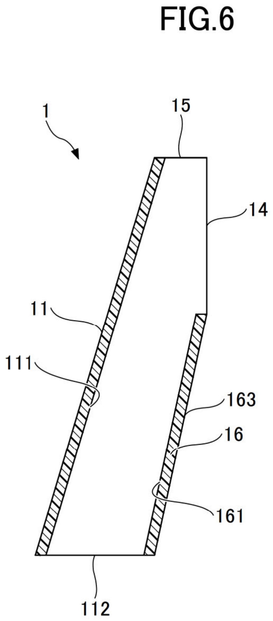

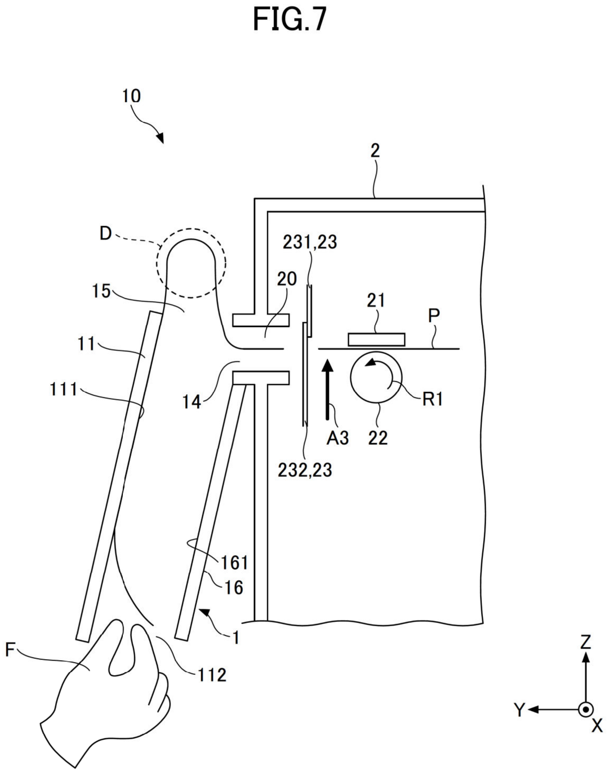

A bezel according to a first embodiment and a printer having a bezel will be described with reference to FIGS. 1 to 7. FIG. 1 is a cross-sectional view illustrating an overall configuration of a printer 10 having a bezel 1 according to a first embodiment. FIG. 2 is a perspective view illustrating the bezel 1 viewed from the front. FIG. 3 is a perspective view illustrating the bezel 1 viewed from the rear. FIG. 4 is a perspective half cross-sectional view illustrating the bezel 1 viewed from the front. FIG. 5 is a perspective half cross-sectional view illustrating the bezel 1 viewed from the rear. FIG. 6 is a cross-sectional view illustrating the bezel 1 viewed from a side. FIG. 7 is a cross-sectional view illustrating paper bending in the printer 10 having the bezel 1.

As shown in FIG. 1, the printer 10 has the bezel 1 and a printer body 2. The printer body 2 includes a print head 21, a platen roller 22, a cutter 23, and a paper discharge port 20. FIGS. 1 and 7 show partial cross-sections of the printer 10 including the bezel 1, the print head 21, the platen roller 22, the cutter 23, and the paper discharge port 20.

The printer 10 issues a receipt or the like by printing on a sheet P. The print head 21 is a thermal head for printing on the sheet P such as thermal roll paper, for example. The platen roller 22 is a roller member that rotates in a rotation direction R1 shown by an arrow in FIG. 1 to feed the sheet P. The printer 10 prints on the sheet P sandwiched between the print head 21 and the platen roller 22 by the print head 21. The printed sheet P is discharged from the paper discharge port 20. The sheet P discharged from the paper discharge port 20 enters the bezel 1 arranged in the printer body 2. The bezel 1 is a box-like member having a space inside. The printer 10 cuts the sheet P partially inside the bezel 1 with the cutter 23. The printer 10 can issue the sheet P cut by the cutter 23 as a ticket of a concert, a receipt, or the like.

The bezel 1 according to the first embodiment has a guide part 11. The guide part 11 includes a contact surface 111 which comes in contact with a part of the sheet P discharged in a first direction A1 from the paper discharge port 20, and a paper removal port 112 which allows the sheet P to be removed. The guide part 11 can redirect the discharge direction of the sheet P from the first direction A1 to a second direction A2. A feeding direction of the sheet P is redirected from the first direction A1 to the second direction A2 when a portion Pc of the sheet P comes into contact with the contact surface 111 of the guide part 11.

Here, in a printer for issuing receipts or the like, when a user of the printer pinches and pulls an end of the sheet during printing, an unintended force may act on the sheet, possibly resulting in an operational failure such as a paper jam or an abnormal cut by the cutter. In the printer 10, since the sheet P discharged from the paper discharge port 20 of the printer body 2 enters the bezel 1, the end of the sheet P during printing is less likely to be exposed from the printer 10. Furthermore, a timing at which the end of the sheet P during printing is exposed from the printer 10 is delayed relative to a timing at which the paper is discharged from the paper discharge port 20 of the printer body 2. Since the end of the sheet P during printing is hardly exposed from the printer 10 and the timing at which it is exposed is delayed, a user of the printer 10 (hereinafter referred to simply as a user) is less likely to touch the sheet P during printing than when the end of the sheet P during printing is exposed from the printer 10. Since the user is less likely to touch the sheet P, an unintended force acting on the sheet P by the user of the printer pinching and pulling the end of the sheet P during printing is reduced. As a result, in the printer 10, malfunction such as abnormality in cutting the sheet P by a jam or a cutter is easily reduced.

Further, for example, when the discharge direction of the sheet P is not redirected from the first direction A1, the horizontal depth of the bezel, that is, the size of the bezel in the Y-direction, is required to be large in order to fit the paper discharged from the discharge port of the printer body in the bezel. With the large horizontal depth of the bezel, the horizontal depth of the printer having the bezel is easily increased. In the bezel 1 according to the first embodiment, as compared with the case where the discharge direction of the sheet P is not redirected from the first direction A1, the horizontal depth of the bezel 1 is reduced, and the horizontal depth of the printer 10 having the bezel 1 can be reduced. Thus, in the first embodiment, the bezel 1 capable of reducing the horizontal depth of the printer 10 can be provided. Further, with the small horizontal depth of the printer 10, the horizontal depth of a ticket machine or the like for storing the printer 10 can be reduced.

Examples shown in FIGS. 1 to 6 will be described in detail below. In the example shown in FIG. 1, the bezel 1 is detachable from the printer body 2. However, the bezel 1 may be formed seamlessly with the printer body 2 so as not to be detachable from the printer body 2.

In the examples shown in FIGS. 1 to 6, the bezel 1 has a paper receiving port 14 for receiving the sheet P discharged from the paper discharge port 20 of the printer body 2, and a first opening 15 for allowing the sheet P to protrude in a direction different from the discharge direction of the sheet P. The bezel 1 also has a back part 16 including a facing surface 161 facing the contact surface 111, a first lateral part 171 arranged on one side of the guide part 11 and continuous with the guide part 11 and a second lateral part 172 arranged on the other side of the guide part 11 and continuous with the guide part 11, the arrangement being in a direction orthogonal to the second direction A2. The bezel 1 includes a resin. However, the bezel 1 may include a metal or the like.

The first direction A1 is a direction toward the +Y-direction. The second direction A2 is a direction toward the -Z-direction. The "direction orthogonal to the second direction A2" is the X-direction. However, the first direction A1 may be a direction toward the -Y-direction, and the second direction A2 may be a direction toward the +Z-direction.

The guide part 11 is a front portion of the bezel 1. The contact surface 111 of the guide part 11 is inclined relative to the vertical direction such that the contact surface 111 is positioned farther from the printer body 2 as the contact surface 111 extends from the guide part 11 toward the paper removal port 112. The vertical direction corresponds to the Z-direction as an example. The inclination angle θ shown in FIG. 1 represents the inclination of the contact surface 111 with respect to the Z-direction. Since the contact surface 111 is inclined in this manner, the guide part 11 can suitably guide the sheet P discharged from the paper discharge port 20 to the paper removal port 112 with a simple configuration.

The paper receiving port 14 has an opening provided on the back part 16 on the upper surface side of the bezel 1. The bezel 1 is provided on the printer body 2 so that the paper receiving port 14 faces the paper discharge port 20 of the printer body 2. The sheet P discharged from the paper discharge port 20 can enter the bezel 1 through the paper receiving port 14.

The paper removal port 112 has an opening provided on the side of the lower part of the bezel 1. The user can remove the sheet P in the bezel 1 from the paper removal port 112.

The first opening 15 is an opening provided on the side of the upper end of the guide part 11. The first opening 15 is continuous with the paper receiving port 14. In the example shown in FIG. 7, a bent portion D of the sheet P, caused by the user pinching the leading edge of the sheet P, protrudes from the first opening 15 toward the +Z direction. Since the sheet P protrudes from the first opening 15, a force acting on the sheet P in a direction different from the discharge direction of the sheet P is relaxed, and the position and posture of the sheet P are stabilized. As a result, malfunction such as abnormal cutting of the sheet P by a jam or a cutter caused by the force can be easily reduced. Further, a structure in which the sheet P protrudes in a direction different from the discharge direction of the sheet P is particularly suitable when the sheet P of a series of receipts or the like is longer than expected in a state where the paper removal port 112 is blocked by a bag or the like. Further, if the printer 10 is arranged so that the first opening 15 is positioned inside the casing of a ticketing machine or the like, it is possible to prevent a user from accidentally pinching the bent portion D.

In the example shown in FIG. 7, the cutter 23 has a fixed blade 231 and a movable blade 232 movable in a moving direction A3. When the movable blade 232 moves in the moving direction A3 with the sheet P positioned between the fixed blade 231 and the movable blade 232, the sheet P is cut. Since the bent portion D of the sheet P comes out from the first opening 15, the cutter 23 can cut the sheet P while the position and posture of the sheet P are stabilized. The user can pinch the cut sheet P with fingers F and remove it from the paper removal port 112. The movable blade 232 returns to the position before cutting after finishing cutting of the sheet P. The cutter 23 is in a state such that the next sheet P printed by the print head 21 can pass between the fixed blade 231 and the movable blade 232.

The back part 16 is a part on the back side of the bezel 1 facing the guide part 11. The first lateral part 171 is a part on the +X-direction of the bezel 1. The +X-direction corresponds to "one side of the guide part 11". The second lateral part 172 is a part on the -X-direction of the bezel 1. The -X-direction corresponds to "the other side of the guide part 11". Each of the first lateral part 171 and the second lateral part 172 is continuous with the guide part 11 and continuous with the back part 16.

### [SECOND EMBODIMENT]

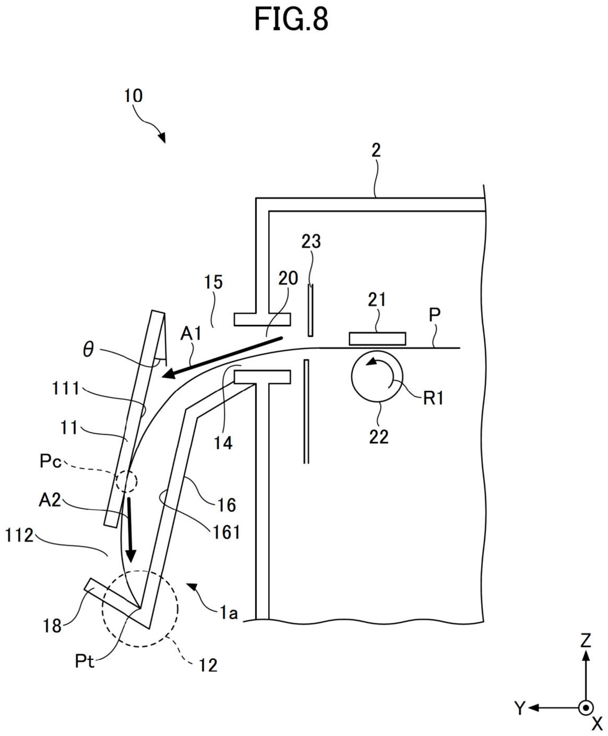

Next, a bezel according to a second embodiment will be described with reference to FIGS. 8 to 13. Note that the same names and reference numerals as those of the embodiments already described indicate the same or similar members or configurations, and a detailed description thereof will be omitted accordingly. This point will be the same in the following embodiments and modifications.

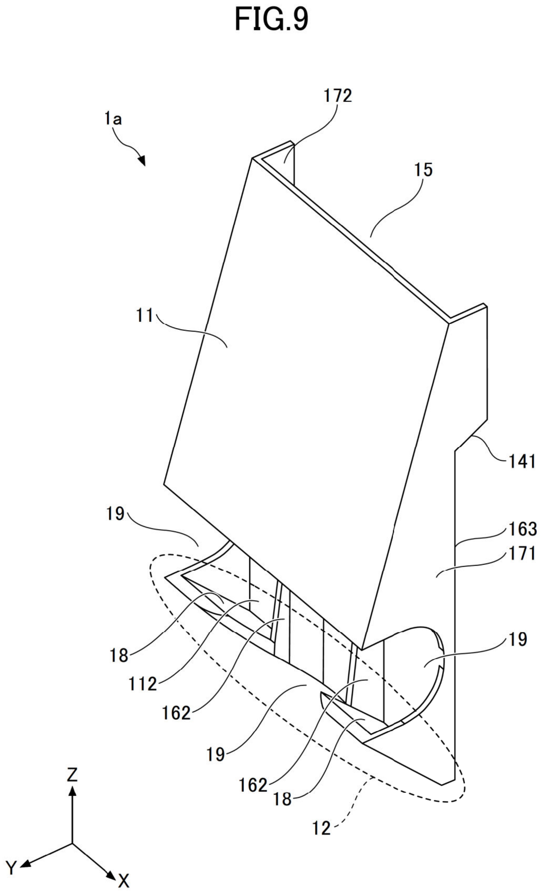

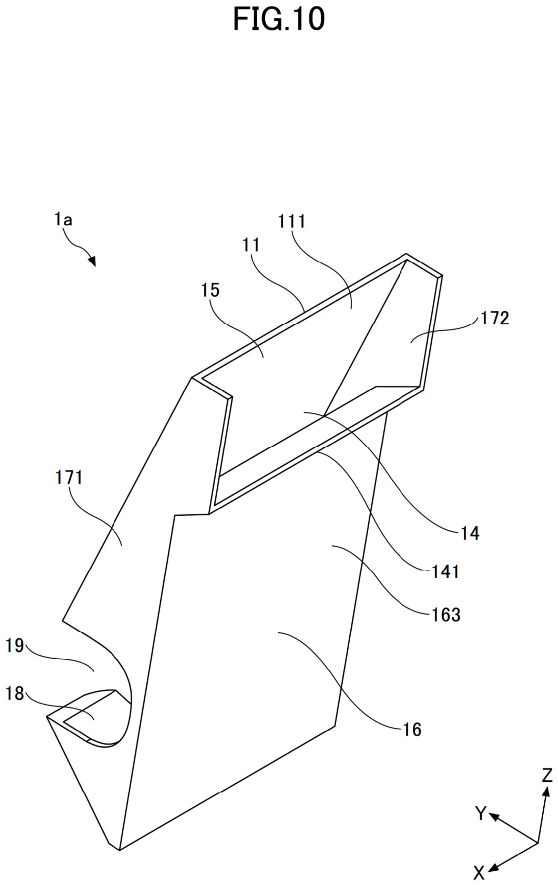

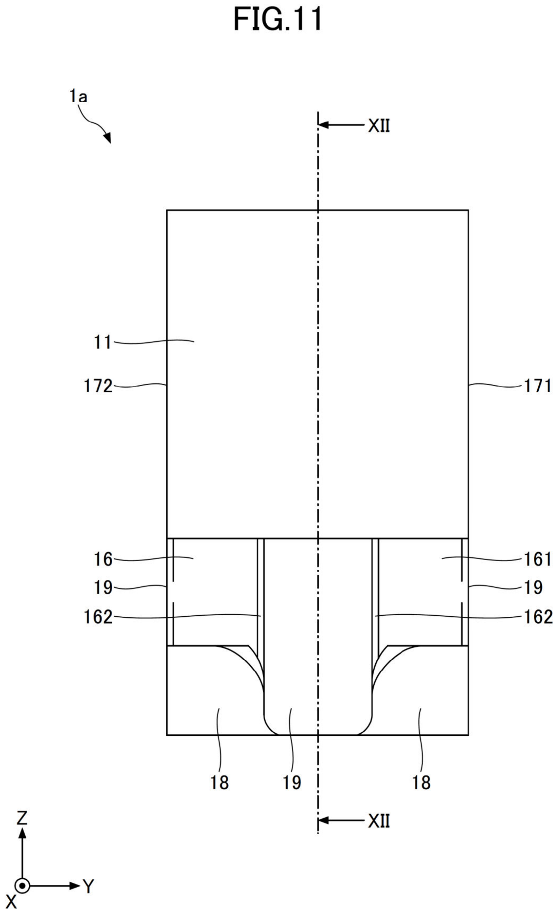

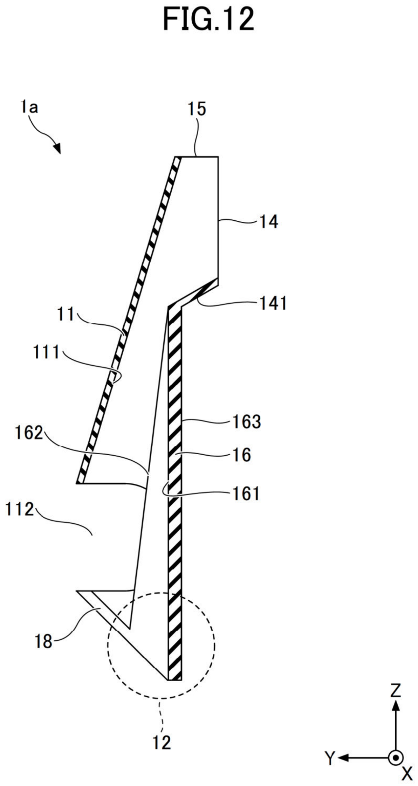

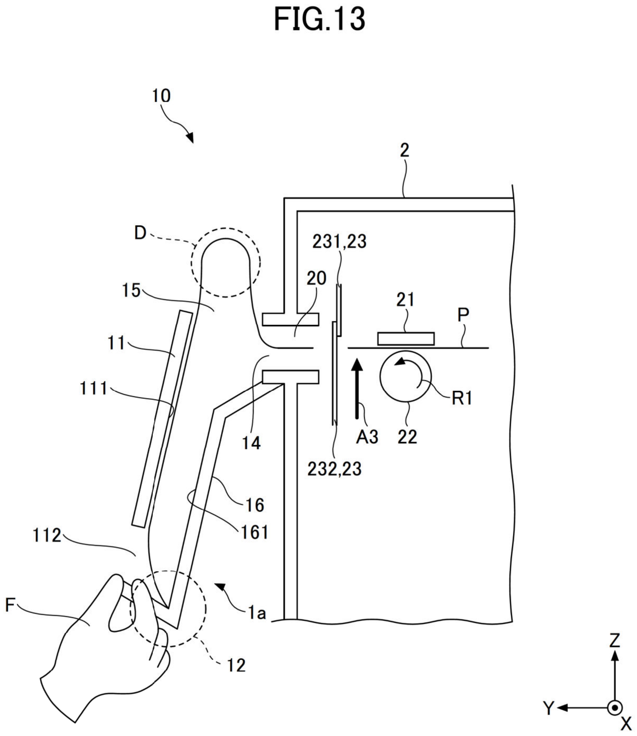

FIG. 8 is a cross-sectional view illustrating an overall configuration of the printer 10 having a bezel 1a according to a second embodiment. FIG. 9 is a perspective view illustrating the bezel 1a viewed from the front. FIG. 10 is a perspective view illustrating the bezel viewed from the rear. FIG. 11 is a front view illustrating the bezel 1a. FIG. 12 is a cross-sectional view taken along a line XII-XII of FIG. 11. FIG. 13 is a cross-sectional view illustrating paper bending in the printer 10 having the bezel 1a. FIGS. 8 and 13 show partial cross-sectional views of the printer 10 including the bezel 1a, the print head 21, the platen roller 22, the cutter 23, and the paper discharge port 20.

The bezel 1a according to the second embodiment is mainly different from the bezel 1 according to the first embodiment in that the bezel 1a includes a paper receiving part 12 for receiving the sheet P fed in the second direction A2, and the paper removal port 112 has an opening through which the sheet P received by the paper receiving part 12 is removed.

In the second embodiment, the bezel 1a redirects the discharge direction of the sheet P entering the bezel 1a from the paper receiving port 14 to the second direction A2 from the first direction A1 by the guide part 11. The bezel 1a receives the sheet P sent in the second direction A2 by the paper receiving part 12. With this configuration, the sheet P discharged from the paper discharge port 20 can be accommodated in the bezel 1a with a simpler structure, as compared with a case where a complex structure such as a paper alignment part for controlling the orientation or position of the sheet or a complex paper discharge mechanism is provided. Thus, the bezel 1a and the printer 10 which can reduce malfunction of the printer 10 with a simpler structure can be provided in the second embodiment. Further, in the bezel 1a, since the paper receiving part 12 receives the discharged sheet P, the sheet P is substantially not exposed outside the paper removal port 112, and thus the sheet P becomes less readily pulled. This facilitates a further reduction in malfunction of the printer 10. Other effects of the bezel 1a are the same as those of the bezel 1 according to the first embodiment.

In the examples shown in FIGS. 9 to 12, the bezel 1a has a mounting part 141 to the printer body 2. The bezel 1a also has a lower part 18 disposed on the opposite side of the guide part 11 across the paper removal port 112 in the second direction A2, and a second opening 19 provided in each of the first lateral part 171, the second lateral part 172, and the lower part 18.

The paper receiving part 12 is a portion of the bezel 1a positioned further in the -Z-direction than the guide part 11. As shown by a dashed circle in FIGS. 8, 9, and 12, the paper receiving part 12 includes a lower part in the back part 16 and a lower part in the lower part 18. For example, a leading end Pt of the sheet P fed in the second direction A2 advances toward the -Z-direction while contacting the back part 16 or the lower part 18 and abuts and stops at a portion where the back part 16 and the lower part 18 intersect. Thus, the paper receiving part 12 can stably receive the sheet P.

The paper removal port 112 is provided between the guide part 11 and the lower part 18 in the Z-direction on the front side of the bezel 1a. The user can remove the sheet P received by the paper receiving part 12 from the paper removal port 112.

The bezel 1a is attached to the printer body 2 via the mounting part 141. The mounting part 141 is positioned between the paper receiving port 14 and the back part 16 and is continuous with the back part 16. The mounting part 141 protrudes from the back surface 163 positioned on the opposite side of the facing surface 161 in the back part 16 to the opposite side of the facing surface 161 and extends along the X-direction orthogonal to the second direction A2. The bezel 1a having the mounting part 141 facilitates mounting of the bezel 1a to the printer body 2. The mounting part 141 positioned on the -Z-direction of the paper receiving port 14 facilitates entry of the sheet P discharged from the paper discharge port 20 of the printer body 2 into the bezel 1a through the paper receiving port 14.

The first opening 15 is an opening provided at the upper end of the guide part 11. The first opening 15 is continuous with the paper receiving port 14. In the bezel 1a, when the leading end of the sheet P fed by the platen roller 22 abuts on the paper receiving part 12 during printing on the sheet P, a force in a direction different from the discharge direction of the sheet P acts on the sheet P from the paper receiving part 12. In response to this force, as shown in FIG. 13, the bent portion D of the sheet P protrudes outward from the first opening 15. Since the bent portion D of the sheet P protrudes outward from the first opening 15, the force acting on the sheet P in a direction different from the discharge direction of the sheet P is relaxed, and the position and posture of the sheet P are stabilized. As a result, malfunction such as abnormal cutting of the sheet P by a jam or a cutter caused by this force can be easily reduced.

As shown in FIGS. 9, 11, and 12, the back part 16 is a portion on the back of the bezel 1a facing the guide part 11. The back part 16 includes the facing surface 161 facing the contact surface 111, and two linear projections 162 protruding from the facing surface 161 toward the contact surface 111 and extending along the second direction A2. The upper ends of the ridge lines of the projections 162 coincide with the upper end of the facing surface 161, and the lower ends of the ridge lines of the projections 162 contact the inner surface of the lower part 18.

For example, in a general bezel, a sheet fed into the bezel sticks to the back of the bezel, and a frictional force between the sheet and the back is increased to inhibit sheet feeding, which may cause an operation failure such as a cutting abnormality by a jam or a cutter. In the bezel 1a, since the back part 16 includes the projections 162, the surface of the sheet P fed into the bezel 1a, which faces the back part 16, is less likely to stick to the back part 16. Thus, in the first embodiment, it is less likely that sheet feeding is inhibited by the frictional force between the sheet P and the back part 16, and it is easier to reduce an operation failure such as a cutting abnormality by a jam or a cutter.

The projections 162 extend along the second direction A2. Thus, a part of the sheet P is less readily caught by the projections 162, and sheet feeding is less readily inhibited, as compared with the case where the projections 162 are projections extending in the direction intersecting the second direction A2 or local projections not extending in either of the second direction A2 or the intersecting direction. The number of the projections 162 is not limited to two and may be one or more. From the viewpoint of reducing inclination of the sheet P to be fed about an axis parallel to the Z-axis, it is preferable that the number of projections 162 be two or more.

The lower part 18 is a portion on the lower surface of the bezel 1a. The lower part 18 is positioned on the -Z-direction of the paper removal port 112. The lower part 18 is continuous with the first lateral part 171, the second lateral part 172 and the back part 16.

The second opening 19 is an opening provided in each of the first lateral part 171, the second lateral part 172, and the lower part 18. The user can insert the fingers F into at least one of the second openings 19 and pinch the sheet P received by the paper receiving part 12 with the fingers to remove it from the paper removal port 112. Since the bezel 1a has the second opening 19, a space for inserting the fingers F into the bezel 1a can be widened, so that the user can easily remove the sheet P.

In the examples shown in FIGS. 9 to 11, the outer edge shape of the second opening 19 is substantially rectangular including curved surfaces at the corners. However, if the user can insert the fingers F, the outer edge shape of the second opening 19 can be appropriately changed according to the design or the like of the printer 10. The second opening 19 is not necessarily provided in each of the first lateral part 171, the second lateral part 172, and the lower part 18 and may be provided in at least one of the first lateral part 171, the second lateral part 172, and the lower part 18.

### [THIRD EMBODIMENT]

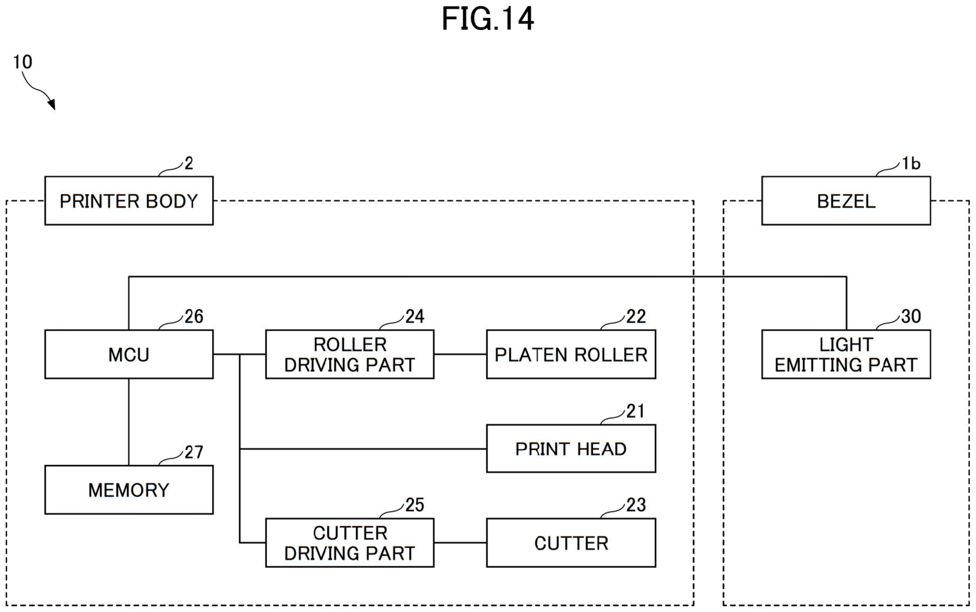

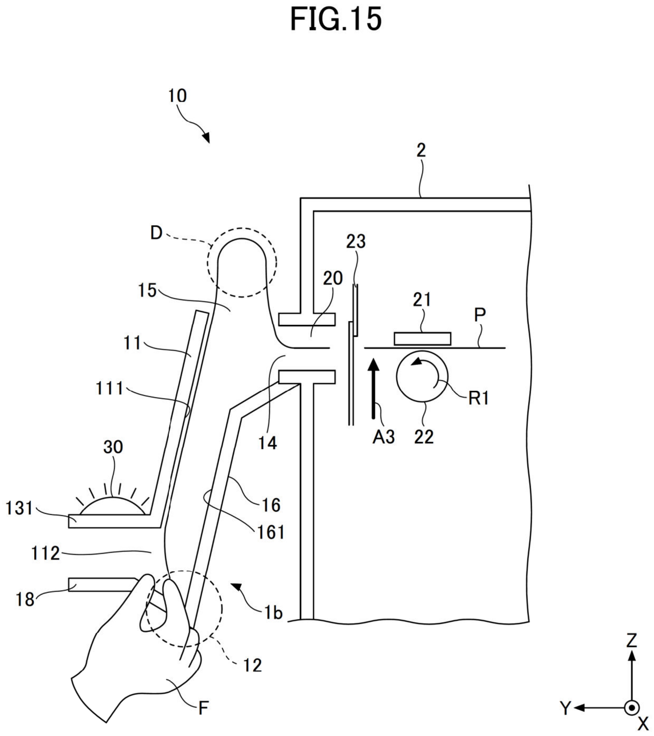

Next, a bezel according to the third embodiment and a printer having the bezel will be described with reference to FIGS. 14 and 15.

FIG. 14 is a block diagram illustrating an overall configuration of a printer 10 having a bezel 1b according to the third embodiment. FIG. 15 is a cross-sectional view illustrating the overall configuration of the printer 10 having the bezel 1b. FIG. 15 shows a partial cross-sectional view of the printer 10 including the bezel 1b of the printer 10, the print head 21, the platen roller 22, the cutter 23, the paper discharge port 20, and the like.

As shown in FIGS. 14 and 15, the bezel 1b according to the third embodiment is mainly different from the bezel 1a according to the second embodiment in that the bezel 1b has a light emitting part 30 for notifying that the sheet P is to be removed from the bezel 1b. "To be removed" means, for example, that printing on the sheet P is completed and the sheet P is cut.

In the example shown in FIG. 14, the printer body 2 has a roller driving part 24 for rotationally driving the platen roller 22 and a cutter driving part 25 for driving the cutter 23. The printer body 2 also has an MCU (Micro Controller Unit) 26 for controlling the operations of the print head 21, the roller driving part 24, the cutter driving part 25, and the light emitting part 30, and a memory 27 for storing a program for executing processing by the MCU 26, various data, and the like.

In the example shown in FIG. 15, the bezel 1b includes a protrusion 131 protruding from the paper removal port 112 in the +Y-direction. The light emitting part 30 is placed on the +Z-direction surface of the protrusion 131. The light emitting part 30 is, for example, an LED (Light Emitting Diode). The position at which the light emitting part 30 is disposed is not limited to the +Z-direction surface of the protrusion 131 and may be any position as long as it is visible to the user. The light emitting part 30 is not limited to an LED and may be an LD (Laser Diode) or the like.

The light emitting part 30 is electrically connected to the MCU 26 and is turned on or off controlled by the MCU 26. For example, controlled by the MCU 26, the printer 10 turns on the light emitting part 30 at the timing when the cutter 23 cuts the sheet P printed by the print head 21. When the light emitting part 30 is turned on, the user recognizes that the sheet P is in a removal state and can pinch the sheet P with the fingers F and remove it from the paper removal port 112. Thus, the bezel 1b can notify the user that the sheet P is in a removal state at an appropriate timing by turning on the light emitting part 30. Thus, according to the third embodiment, it is possible to provide the bezel 1b and the printer 10 which can further reduce the operation failure of the printer 10 with a simple configuration by further reducing the user's pinching and pulling the sheet P with the fingers F during printing. It should be noted that other effects of the bezel 1b are the same as those of the bezel 1a according to the second embodiment. The bezel 1b according to the third embodiment is applicable to the bezel 1 according to the first embodiment.

### [MODIFIED EXAMPLE]

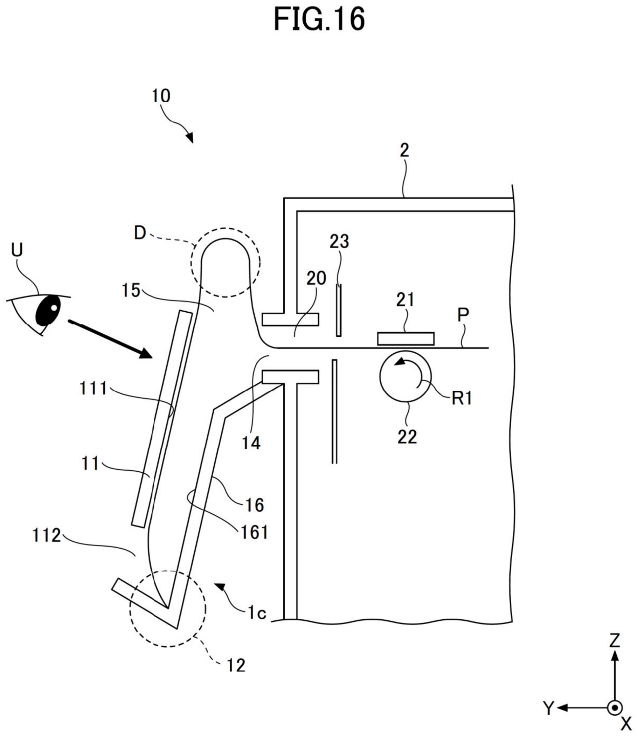

FIG. 16 is a cross-sectional view illustrating an overall configuration of a printer 10 having a bezel 1c according to a modified example. FIG. 16 is a partial cross-sectional view of the printer 10 including the bezel 1c, the print head 21, the platen roller 22, the cutter 23, the paper discharge port 20, and the like.

The bezel 1c according to the modified example is mainly different from the bezel 1a according to the second embodiment in that the guide part 11 is transmissive to visible light.

The guide part 11 preferably has a transmittance of 50% or more for visible light, for example. Visible light is light having a wavelength of 360 nm or more and 830 nm or less. The bezel 1c can be manufactured, for example, by forming the guide part 11 from a resin or glass that is transmissive to visible light, forming the portions other than the guide part 11 from a resin or the like that is light-shielding with respect to visible light, and assembling these parts.

Since the guide part 11 is transmissive to visible light, a user U can see the state of the sheet P positioned in the bezel 1c through the guide part 11. Thus, the user U can easily pinch the sheet P with the fingers F at an appropriate timing and remove it. As a result, in the modified example, the bezel 1c and the printer 10 which can reduce the malfunction of the printer 10 with a simple configuration can be provided.

Other effects of the bezel 1c are the same as those of the bezel 1a according to the second embodiment. The bezel 1c according to the modified example can be applied to each of the first embodiment, the second embodiment, and the third embodiment.

Further, the present invention is not limited to these embodiments, and various variations and modifications may be made without departing from the scope of the present invention.

## Claims

1. A bezel configured for use in a printer including a paper discharge port, comprising a guide part including:
a contact surface configured to contact a part of a sheet of paper discharged in a first direction from the paper discharge port; and
a paper removal port configured to allow the sheet of paper to be removed,
wherein the guide part is configured to redirect a discharge direction of the sheet of paper from the first direction to a second direction.

2. The bezel according to claim 1, further comprising a first opening configured to allow the sheet of paper to protrude in a direction different from the discharge direction of the sheet of paper.

3. The bezel according to claim 1, further comprising a paper receiving part configured to receive the sheet of paper fed in the second direction,
wherein the paper removal port has an opening configured to allow the sheet of paper received by the paper receiving part to be removed.

4. The bezel according to claim 3, wherein the contact surface is inclined relative to a vertical direction such that the contact surface is positioned farther away from the printer as the contact surface extends from the guide part toward the paper receiving part.

5. The bezel according to claim 1, further comprising:
in a direction orthogonal to the second direction,
a first lateral part arranged on one side of the guide part and continuous with the guide part, and
a second lateral part arranged on another side of the guide part and continuous with the guide part;
a lower part disposed on an opposite side of the guide part across the paper removal port in the second direction; and
a second opening provided in at least one of the first lateral part, second lateral part, and the lower part.

6. The bezel according to claim 1, further comprising a back part including a facing surface facing the contact surface,
wherein the back part includes a linear projection protruding from the facing surface toward the contact surface side and extending along the second direction.

7. The bezel according to claim 1, further comprising a light emitting part configured to notify that the sheet of paper is to be removed from the bezel.

8. The bezel according to claim 1, wherein the guide part is transmissive to visible light.

9. A printer comprising:
a printer body including:
a print head;
a platen roller;
a cutter configured to cut the sheet of paper; and
the paper discharge port; and
the bezel of any one of claims 1 to 8 provided on the printer body.
